(19) Europäisches Patentamt
European Patent Office
Office européen des brevets

(11) **EP 4 696 486 A1**

(12) **EUROPEAN PATENT APPLICATION**
published in accordance with Art. 153(4) EPC

(43) Date of publication:
**18.02.2026 Bulletin 2026/08**

(21) Application number: **23933064.0**

(22) Date of filing: **14.04.2023**

(51) International Patent Classification (IPC):
***B29C 65/02*** *(2006.01)*

(52) Cooperative Patent Classification (CPC):
**B29C 65/02**

(86) International application number:
**PCT/JP2023/015188**

(87) International publication number:
**WO 2024/214288 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **IHI Aerospace Co., Ltd.
Gunma 370-2398 (JP)**

(72) Inventors:
• **MORIKAWA, Akio
Tomioka-shi, Gunma 370-2398 (JP)**
• **AKIMOTO, Toyoharu
Tomioka-shi, Gunma 370-2398 (JP)**

(74) Representative: **Epping - Hermann - Fischer
Patentanwaltsgesellschaft mbH
Schloßschmidstraße 5
80639 München (DE)**

(54) **METHOD FOR JOINING MEMBERS MADE OF MATERIAL CONTAINING THERMOPLASTIC RESIN**

(57)      To provide a method by which, when two members made of a material containing a thermoplastic resin are joined to each other by fusion, deformation in one of the members due to a flow of the thermoplastic resin having changed into the liquid phase can be avoided. The method includes the successive steps of placing a first member on an upper surface of a first heat source, placing a second member on an upper surface of the first member with or without a joining film made of a thermoplastic resin interposed therebetween, positioning a second heat source above the second member, heating the first heat source to a predetermined first temperature and the second heat source to a predetermined second temperature and lowering the second heat source so as to press a lower surface of the second heat source against an upper surface of the second member with a predetermined downward load applied to the second heat source, and cooling the first member and the second member after a predetermined hold time has elapsed from a time when a temperature of the first heat source has reached the first temperature and a temperature of the second heat source has reached the second temperature. The second temperature is higher than a melting point of the thermoplastic resin and lower than a thermal decomposition temperature of the thermoplastic resin, and the first temperature is lower than the melting point of the thermoplastic resin.

FIG. 1

**Description**

**Technical Field**

The present disclosure relates to a method for joining members made of a material containing a thermoplastic resin such as, for example, a thermoplastic resin composite material.

**Background Art**

Examples of known methods for joining members made of a material containing a thermoplastic resin include mechanical joining using a fastener and adhesion joining using a thermosetting resin (adhesive).

However, with the former method, that is, the mechanical joining, it is necessary to provide openings in the members to allow the fastener to extend therethrough, and the strength of the members may be reduced due to the openings.

With the latter method, that is, the adhesion joining, it is necessary to evaluate, in advance, the affinity between the adhesive and the joined members. Furthermore, facilities such as a freezer for storing the adhesive and an autoclave for setting the adhesive in a joining process are necessary. In addition, for example, it is necessary to manage the expiration of the adhesive. Thus, an increase in cost is unavoidable.

Accordingly, a method in which two joined members are heated so as to melt the thermoplastic resin contained in both the members, and both the members are joined together with the molten thermoplastic resin interposed therebetween, that is, fusion, has been proposed.

However, in normal fusion, it is necessary that two joined members be entirely heated to a temperature equal to or higher than the melting point of the thermoplastic resin. Thus, deformation due to a flow of the thermoplastic resin having changed into the liquid phase may occur in the entirety of both the members. In particular, in a case where two joined members having significantly different sizes are fused together, even when the deformation occurring in the small member is tolerable or can be corrected, deformation that is intolerable or cannot be corrected may occur in the large member. This is not desirable.

**Summary of the Invention**

**Problems to be solved by the Invention**

The present disclosure has been made in view of the above-described problem and is aimed at providing a method for joining, by fusion, two members made of a material that contains a thermoplastic resin and allowing prevention of deformation of both the members due to a flow of the thermoplastic resin having changed into the liquid phase.

**Means for solving the Problems**

In order to address the above-described problem, a method for joining according to the present disclosure is a method for joining a first member and a second member to each other. The first member and the second member are made of a material containing a thermoplastic resin. The method includes the successive steps of placing the first member on an upper surface of a first heat source, placing the second member on an upper surface of the first member with or without a joining film made of a thermoplastic resin interposed therebetween, positioning a second heat source above the second member, heating the first heat source to a predetermined first temperature and the second heat source to a predetermined second temperature and lowering the second heat source so as to press a lower surface of the second heat source against an upper surface of the second member with a predetermined downward load applied to the second heat source, and cooling the first member and the second member after a predetermined hold time has elapsed from a time when a temperature of the first heat source has reached the first temperature and a temperature of the second heat source has reached the second temperature. The second temperature is higher than a melting point of the thermoplastic resin and lower than a thermal decomposition temperature of the thermoplastic resin, and the first temperature is lower than the melting point of the thermoplastic resin.

**Advantageous Effects of the Invention**

According to the present disclosure, when two members made of the material that contains the thermoplastic resin are joined by fusion, heating for melting the thermoplastic resin is limited to a joining region of both the members. This can produce a good effect of enabling prevention of the occurrences of the deformation due to the flow of the thermoplastic resin having changed into the liquid phase in the entirety of both the members.

## Brief Description of the Drawings

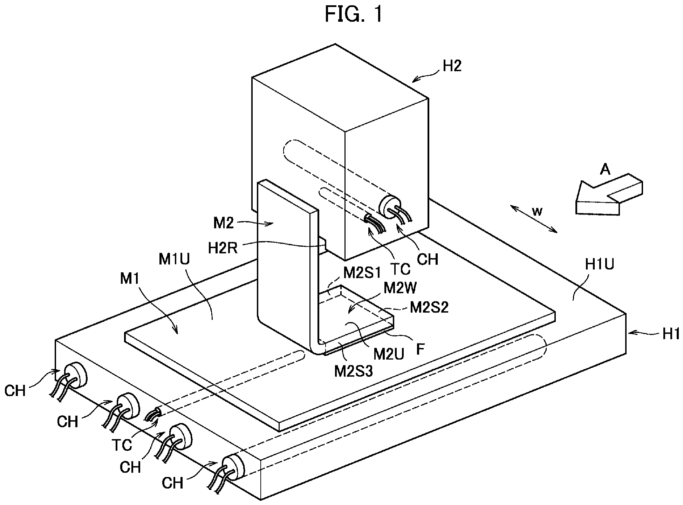

Fig. 1 is a schematic perspective view illustrating an arrangement state of two members made of a material containing a thermoplastic resin and devices for joining these members at a time immediately before the start of a joining process according to a method of the embodiment of the present disclosure.

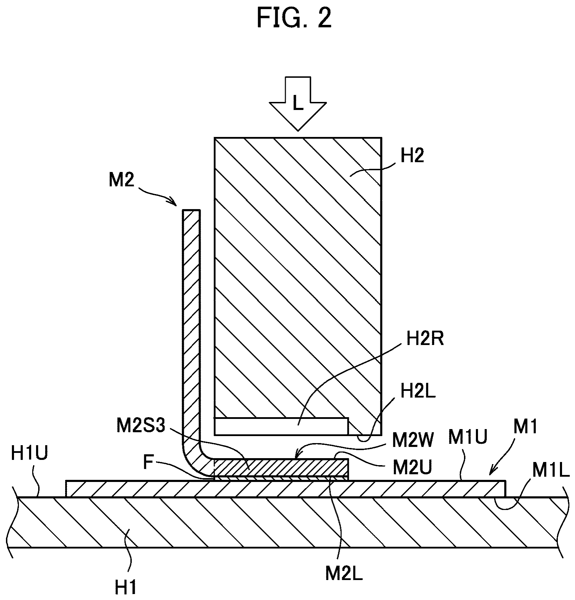

Fig. 2 is a schematic sectional view illustrating a main part of the arrangement state, at the center in the width direction (w direction illustrated in Fig. 1), of two members made of the material containing the thermoplastic resin and the devices for joining these members at the time immediately before the start of the joining process according to the method of the embodiment of the present disclosure.

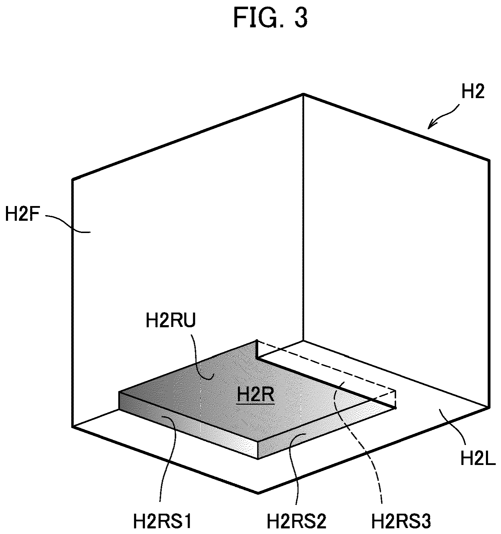

Fig. 3 is a schematic perspective view of a second heat source seen from below used for the joining process according to the method of the embodiment of the present disclosure.

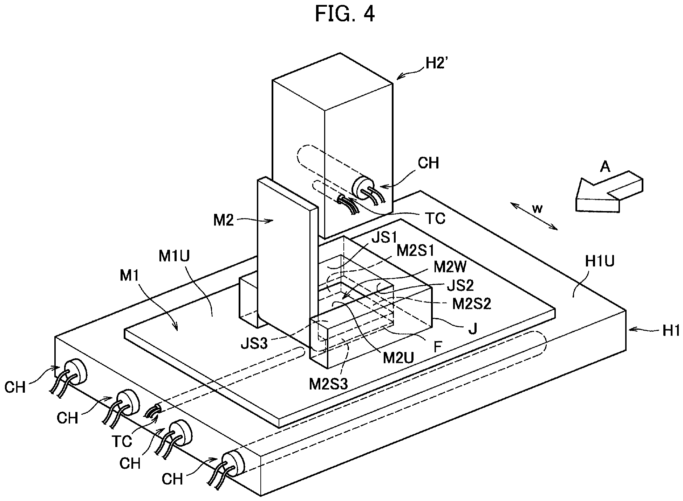

Fig. 4 is a schematic perspective view illustrating an arrangement state of two members made of the material containing the thermoplastic resin and devices for joining these members at the time immediately before the start of the joining process according to a method of the embodiment of the present disclosure.

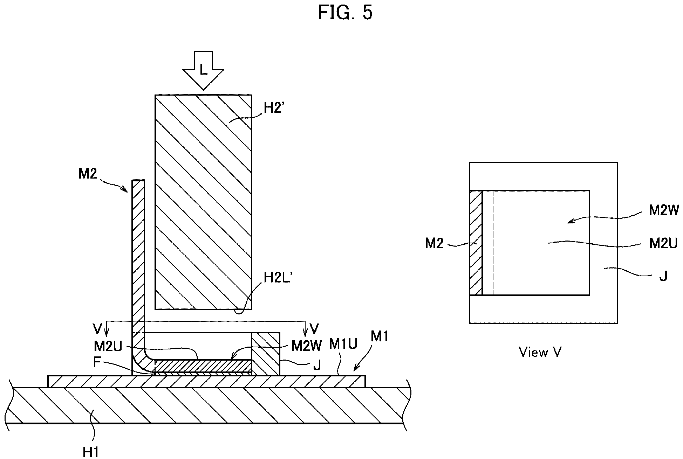

Fig. 5 is a schematic sectional view illustrating the main part of the arrangement state, at the center in the width direction (w direction illustrated in Fig. 4), of two members made of the material containing the thermoplastic resin and devices for joining these members at the time immediately before the start of the joining process according to the method of the embodiment of the present disclosure.

## Mode for carrying out the Invention

Hereinafter, an embodiment of the present disclosure will be described in detail with reference to the drawings.

Fig. 1 is a schematic perspective view illustrating an arrangement state of two members made of a material containing a thermoplastic resin and devices for joining these members at a time immediately before the start of a joining process according to a method of the embodiment of the present disclosure. Fig. 2 is a schematic sectional view illustrating a main part of the arrangement state at the center in the width direction (w direction illustrated in Fig. 1).

Figs. 1 and 2 illustrate a state when a second member M2 made of a material containing a thermoplastic resin is joined, at a joining portion M2W of the second member M2, to an upper surface M1U of a first member M1 that is likewise made of a material containing a thermoplastic resin.

The material containing a thermoplastic resin can be, for example, a carbon fiber reinforced plastic (CFRP) made of a thermoplastic resin (for example, polyetheretherketone (PEEK)) as a base material and a carbon fiber as a reinforcing material. However, the material containing a thermoplastic resin may be any material containing a thermoplastic resin. However, preferably, the thermoplastic resin contained in the first member M1 and the thermoplastic resin contained in the second member M2 are the same.

In an example illustrated in Figs. 1 and 2, the first member M1 is a comparatively large member having a substantially flat plate shape (of a thickness of, for example, 2 to 3 mm), and the second member M2 is a substantially L-shaped comparatively small plate-shaped member (of a thickness of, for example, 2 to 3 mm). The joining portion M2W of the second member M2 to be joined to the upper surface M1U of the first member M1 is a substantially flat plate-shaped portion corresponding to one of the sides of the L shape (the short side in the illustrated example) and closely hatched in Fig. 2. More precisely, the joining portion M2W is a portion between a lower surface M2L to be brought into contact with the upper surface M1U of the first member M1 with a joining film F, which will be described later, interposed therebetween in a thickness direction and an upper surface M2U positioned on the side opposite from the lower surface M2L in the thickness direction. The joining portion M2W has side surfaces connecting the lower surface M2L and the upper surface M2U to each other (M2S1, M2S2, and M2S3 in the example illustrated in Fig. 1). Here, the side surfaces refer to surfaces open to a space around the joining portion M2W.

The first member M1 and the second member M2 are each shaped in advance by using shaping dies. Here, a release agent for facilitating removal of these members from the shaping dies remains on the surfaces of the members. This release agent interferes with the joining process, which will be described later. Accordingly, the release agent remaining at least on the following portions is removed in advance by an appropriate method such as grinding with sandpaper or sandblasting: a portion of the upper surface M1U of the first member M1 to be brought into contact with the joining portion M2W of the second member M2 with the joining film F, which will be described later, interposed therebetween (first joining surface); and the lower surface M2L of the joining portion M2W of the second member M2 (second joining surface). When the release agent is removed, part of the thermoplastic resin is also removed in a region of the first member M1 near the first joining surface and a region of the second member M2 near the second joining surface. This reduces the thermoplastic resin that can contribute to joining by fusion, which will be described later. When it is recognized that compensation for the lack of the thermoplastic resin is necessary, the joining film F that is likewise made of a thermoplastic resin is interposed between the first joining surface and the second joining surface. When it is recognized that the thermoplastic resin that can contribute to the joining by fusion, which will be described later, sufficiently remains in the region of the first member M1 near the first joining surface and the region of the second member M2 near the second joining surface, the joining film F is not necessarily interposed between the first joining surface and the second joining surface. In this case, the first joining surface is directly brought into contact with the joining portion M2W of the second member M2 without joining film F interposed therebetween, and the second joining surface is directly brought into contact with the upper surface M1U of the first member M1 without joining film F interposed therebetween.

In the state immediately before the start of the joining process illustrated in Figs. 1 and 2, the first member M1 is placed on an upper surface H1U of a first heat source H1. Furthermore, the second member M2 is placed on the first member M1 with the joining film F interposed therebetween. That is, the above-described joining film F is interposed between the lower surface M2L of the joining portion M2W of the second member M2 and the upper surface M1U of the first member M1. Furthermore, a second heat source H2 is positioned above the joining portion M2W of the second member M2.

In a plan view, the joining film F has a shape and size substantially the same as those of the lower surface M2L of the joining portion M2W of the second member M2. The joining film F may be made of a thermoplastic resin that is the same as or different from the thermoplastic resin contained in the first member M1 and the second member M2.

The first heat source H1 is a substantially flat panel-shaped metal device, and the upper surface H1U of the first heat source H1 is formed to have a shape and size that allow close contact between the upper surface H1U and the entirety of a lower surface M1L of the first member M1. For example, when the lower surface M1L of the first member M1 is a curved surface (for example, a convex cylindrical surface), the upper surface H1U of the first heat source H1 is formed as a curved surface having a shape complementary to the lower surface M1L (for example, a concave cylindrical surface).

Furthermore, heaters are embedded in the first heat source H1. In the example illustrated in Fig. 1, four cartridge heaters CH are embedded so as to be parallel to each other and substantially parallel to the upper surface H1U of the first heat source H1. Referring to Fig. 1, for avoiding complication of the illustration, an embedded mode of a single cartridge heater CH is schematically illustrated.

Furthermore, a temperature sensor is embedded in the first heat source H1. In the example illustrated in Fig. 1, a single thermocouple TC is embedded such that a temperature measuring junction (not illustrated) of the thermocouple TC is positioned near a portion immediately below the upper surface H1U to be brought into contact with the lower surface M2L of the joining portion M2W of the second member M2.

Meanwhile, the second heat source H2 has a substantially rectangular parallelepiped shape. A recessed portion H2R is provided in a bottom surface H2L of the second heat source H2. Although it is not illustrated, a mechanism is attached to the second heat source H2. This mechanism presses the second heat source H2 downward and causes a downward load L (see an arrow L illustrated in Fig. 2) to be applied to the second heat source H2 while a lower surface of the second heat source H2 (an upper surface H2RU of the recessed portion H2R) is in contact with an upper surface of the second member M2 (the upper surface M2U of the joining portion M2W). The mechanism allows variation of the magnitude of the load L.

In the illustrated example, as illustrated in Fig. 3 being a schematic perspective view of the second heat source H2 seen from below, the recessed portion H2R is a recess open at the bottom surface H2L and a front surface H2F (a surface facing a portion of the second member M2 other than the joining portion M2W (a flat plate-shaped portion corresponding to the long side of the L shape in the illustrated example)) of the second heat source H2. The recessed portion H2R is defined by the upper surface H2RU and three side surfaces H2RS1, H2RS2, and H2RS3 connecting the upper surface H2RU and the bottom surface H2L to each other. In a state in which the second heat source H2 is pressed down as will be described later, the upper surface H2RU of the recessed portion H2R is brought into contact with the upper surface M2U of the joining portion M2W of the second member M2, and the side surfaces H2RS1, H2RS2, and H2RS3 of the recessed portion H2R respectively face the side surfaces M2S1, M2S2, and M2S3 of the joining portion M2W of the second member M2 (see Fig. 1) with respective slight gaps interposed therebetween. That is, the recessed portion H2R of the second heat source H2 is formed so as to be able to accommodate the joining portion M2W of the second member M2 in the above-described state. The gaps formed when the side surfaces of the recessed portion H2R and the side surfaces of the joining portion M2W of the second member M2 face each other can be appropriately determined in consideration of positioning accuracy in the horizontal direction in pressing down of the second heat source H2, a predicted maximum deformation amount of the joining portion M2W of the second member M2 when the second member M2 is heated (due to thermal expansion and/or a flow of the thermoplastic resin), and the like.

Furthermore, a heater is embedded in the second heat source H2. In the example illustrated in Fig. 1, a single cartridge heater CH is embedded immediate above the recessed portion H2R of the second heat source H2 so as to be substantially parallel to the upper surface H2RU of the recessed portion H2R.

Furthermore, a temperature sensor is embedded in the second heat source H2. In the example illustrated in Fig. 1, a single thermocouple TC is embedded such that a temperature measuring junction (not illustrated) of the thermocouple TC is positioned near a portion immediately above the upper surface H2RU of the recessed portion H2R.

Although the cartridge heaters exemplify the heaters embedded in the first heat source H1 and the second heat source H2 in the above description, any self-heating type heaters may be used. Furthermore, the illustrated example does not limit the number of heaters or the arrangement mode in each heat source. The number of heaters and the arrangement modes can be arbitrarily set.

Leads of the cartridge heaters CH and conductors of the thermocouples TC embedded in the first heat source H1 and the second heat source H2 are connected to a general-purpose temperature controller (not illustrated). During the joining process, this temperature controller controls the temperatures of the first heat source H1 and the second heat source H2 in a manner as will be described later.

Furthermore, although it is not illustrated, a blower that can blow air to the entirety of the first member M1 and the second member M2 is installed so as to cool the first member M1 and the second member M2 after the joining process has been performed.

When objects of joining, which are the first and second members M1 and M2 and the joining film F, and the first and second heat sources H1 and H2 are disposed as described above, the joining process is performed according to the method of the embodiment of the present disclosure. Hereinafter, the details of the joining process will be described.

Here, on the assumption that the first member M1 and the second member M2 contain the same thermoplastic resin, three temperatures below are focused as temperatures characterizing thermal properties of the thermoplastic resin.

· Thermal decomposition temperature (Th): the highest temperature at which the thermoplastic resin can be used without the occurrences of thermal decomposition.
· Melting point (Tm): the temperature at which the thermoplastic resin undergoes a phase change from the solid phase into the liquid phase.
· Softening point (Ts): the temperature at which the thermoplastic resin is softened and becomes deformable.
Normally, the relationships $Th > Tm > Ts$ hold. For example, Th is about 400 °C, Tm is about 305 °C, and Ts is about 280 °C.

In the joining process according to the method of the embodiment of the present disclosure, the temperature of the first heat source H1 (first temperature) is set to be lower than the melting point Tm of the thermoplastic resin while the temperature of the second heat source H2 (second temperature) is set to be higher than the melting point Tm of the thermoplastic resin. In this way, the temperature of a joining region of the first member M1 and the second member M2 positioned between both the heat sources is intended to reach the melting point Tm of the thermoplastic resin. Thus, the thermoplastic resin (including the joining film F) is molten in the joining region, that is, the region between the first joining surface (a portion of the upper surface M1U of the first member M1 facing the lower surface M2L of the joining portion M2W of the second member M2) and the second joining surface (the lower surface M2L of the joining portion M2W of the second member M2), and accordingly, both the members can be fused (joined) together.

The above-described fusion is at least achievable also by setting the temperature of the first heat source H1 to be higher than the melting point Tm of the thermoplastic resin and the temperature of the second heat source H2 to be lower than the melting point Tm of the thermoplastic resin. However, as described above, the first member M1 is comparatively large. Accordingly, for avoiding heat effects on the first member M1 having already been shaped (in particular, deformation due to the flow of the thermoplastic resin having changed into the liquid phase), as described above, the temperature of the first heat source H1 is preferably set to be lower than the melting point Tm of the thermoplastic resin, and the temperature of the second heat source H2 is preferably set to be higher than the melting point Tm of the thermoplastic resin.

In the joining process according to the method of the embodiment of the present disclosure, the above-described temperature controller performs control so that a measured temperature by the thermocouple TC embedded in the first heat source H1 becomes a first temperature T1 and a measured temperature by the thermocouple TC embedded in the second heat source H2 becomes a second temperature T2.

Although the first temperature T1 and the second temperature T2 being target values of the control are finally determined by a preliminary experiment as will be described later, as a major premise, it is necessary that setting temperatures T1e and T2e in the preliminary experiment satisfy Expression 1 below.

$$T1e < Tm < T2e < Th \qquad \text{(Expression 1)}$$

Here, in the above-described expression, $T1e < Tm$ is intended to prevent melting of the thermoplastic resin contained in the first member M1, and $T2e < Th$ is intended to prevent the occurrences of thermal decomposition of the thermoplastic resin contained in the second member M2.

For preventing deformation due to softening of the thermoplastic resin contained in the first member M1, the setting temperatures T1e and T2e preferably satisfy Expression 2 below.

$$T1e < Ts < Tm < T2e < Th \qquad \text{(Expression 2)}$$

This condition is achievable when heat dissipation from the first member M1 is small and heat input from the first heat source H1 can cause the temperature of the joining region to efficiently reach the melting point Tm of the thermoplastic resin (that is, without an excessive rise of the temperature of the first member M1).

For example, when a simple case is assumed in which heat-transfer resistances of the first member M1 and the second member M2 are equal to each other at portions immediately below and immediately above the joining region, the initial values of the setting temperatures T1e and T2e can be as follows.

$$T1e = Tm - \Delta T$$

$$T2e = Tm + \Delta T$$

where

$0 < \Delta T < Th - Tm$ (preferably, $Tm - Ts < \Delta T < Th - Tm$).

In the preliminary experiment, thermocouples for experiment are embedded in advance in the joining region (preferably, a region near the first joining surface in the first member M1 and a region near the second joining surface in the joining portion M2W of the second member M2). While the temperature in the joining region is monitored by using the thermocouples, turning on/off of the cartridge heaters CH embedded in the first heat source H1 and the second heat source H2 are controlled by the temperature controller so that the measured temperature by the thermocouple TC embedded in the first heat source H1 becomes the setting temperature T1e and the measured temperature by the thermocouple TC embedded in the second heat source H2 becomes the setting temperature T2e. At this time, the second heat source H2 is pressed downward from the position illustrated in Fig. 2 until the lower surface of the second heat source H2 (upper surface H2RU of the recessed portion H2R) is brought into contact with the upper surface of the second member M2 (the upper surface M2U of the joining portion M2W) with the downward load L kept applied to the second heat source H2.

In this state, when the measured temperatures by the thermocouples for experiment embedded in the joining region become higher than or equal to the melting point Tm of the thermoplastic resin after the measured temperature by the thermocouple TC embedded in the first heat source H1 has reached the setting temperature T1e, the measured temperature by the thermocouple TC embedded in the second heat source H2 has reached the setting temperature T2e, and a hold time t has elapsed, both the members can be tentatively determined to have been fused together. In this case, both the first heat source H1 and the second heat source H2 are turned off and the first member M1 and the second member M2 are cooled to a temperature lower than the melting point Tm by blowing the air to the entirety of the first member M1 and the second member M2 (see an arrow A illustrated in Fig. 1) by using the above-described blower. After the cooling has been completed, whether the fusion has been completed is examined. This examination is performed by observing the situation of the joining region by using a technique of non-destructive testing such as ultrasonic inspection or X-ray computer tomography (CT) scanning.

As a result, when it is confirmed that the fusion of the first member M1 and the second member M2 has actually been completed, the setting temperatures T1e and T2e, the hold time t after the setting temperatures have been reached, and the load L applied to the second heat source H2 at this time are execution conditions in the actual joining process. That is, the setting temperatures T1e and T2e at this time are respectively set to the temperature of the first heat source H1 (first temperature) T1 and the temperature of the second heat source H2 (second temperature) T2 in the actual joining process.

In contrast, when it is confirmed that the fusion of the first member M1 and the second member M2 has not actually been completed, the preliminary experiment is repeated by changing at least one of the setting temperatures T1e and T2e, the hold time t after the setting temperatures have been reached, and the load L applied to the second heat source H2.

The above description has been made on the implicit assumption that the temperature of the first heat source H1 (first temperature) T1 is higher than the room temperature. The reason for this is that, when the temperature T1 of the first heat source H1 is the room temperature, the temperature of the second heat source H2 (second temperature) T2, which is necessary for setting the temperature of the joining region to be higher than or equal to the melting point Tm, exceeds the thermal decomposition temperature Th in generally used thermoplastic resin, and accordingly, the joining process cannot be performed actually. Thus, although it can be said that the first heat source H1 is literally a "heat source" because T1 of the first heat source H1 is higher than the room temperature, in the joining process according to the method of the embodiment of the present disclosure, it can also be said that the first heat source H1 acts as a heatsink with respect to the second heat source H2 acting as a heat source.

Based on the execution conditions (a target value of the measured temperature by the thermocouple TC embedded in the first heat source H1 (the first temperature T1), a target value of the measured temperature by the thermocouple TC embedded in the second heat source H2 (the second temperature T2), the hold time t after the measured temperatures have reached the target values, and the load L applied to the second heat source H2) determined by the above-described preliminary experiment, the actual joining process is performed by executing the following successive steps.

(1) A step of placing the first member M1 on the upper surface H1U of the first heat source H1.
(2) A step of placing (the joining portion M2W of) the second member M2 on the upper surface M1U of the first member M1 with or without the joining film F made of the thermoplastic resin interposed therebetween.
(3) A step of positioning the second heat source H2 above the second member M2.
(4) A step of heating the first heat source H1 to the first temperature T1 (controlling turning on/off of the cartridge heaters CH embedded in the first heat source H1 by the temperature controller so that the measured temperatures by the thermocouples TC embedded in the first heat source H1 become the first temperature T1).
(5) A step of heating the second heat source H2 to the second temperature T2 (controlling turning on/off of the cartridge heater CH embedded in the second heat source H2 by the temperature controller so that the measured temperature by the thermocouple TC embedded in the second heat source H2 becomes the second temperature T2), and lowering the second heat source H2 so as to press the lower surface of the second heat source H2 (the upper surface H2RU of the recessed portion H2R (see Fig. 3) or a bottom surface H2L' (see Fig. 5)) against the upper surface of the second member M2 (the upper surface M2U of the joining portion M2W) with the downward load L kept applied to the second heat source H2.
(6) A step of cooling the first member M1 and the second member M2 (by blowing the air by the blower) after the predetermined hold time t has elapsed from a time when the measured temperatures by the thermocouples TC embedded in the first heat source H1 have reached the first temperature T1 and the measured temperature by the thermocouple TC embedded in the second heat source H2 has reached the second temperature T2.

In step (5) described above, the second heat source H2 may be heated to the second temperature T2, and then, lowered so as to press the lower surface of the second heat source H2 against the upper surface of the second member M2 with the downward load L kept applied to the second heat source H2, or the second heat source H2 may be lowered in advance, and then, heated to the second temperature T2 while the lower surface of the second heat source H2 is pressed against the upper surface of the second member M2 with the downward load L kept applied.

Furthermore, the cooling of the first member M1 and the second member M2 in step (6) described above may be performed with the second heat source H2 left lowered. However, the cooling of the first member M1 and the second member M2 can be facilitated by raising the second heat source H2 at a time when the measured temperatures by the thermocouples TC embedded in both the first heat source H1 and the second heat source H2 become lower than the melting point Tm (preferably, the softening point Ts) of the thermoplastic resin contained in the first member and the second member.

In step (5) described above, the joining portion M2W of the second member M2 is accommodated in the recessed portion H2R provided in the bottom surface H2L of the second heat source H2. At this time, due to heat transfer from the second heat source H2 at which the temperature becomes the temperature T2 higher than the melting point Tm of the thermoplastic resin, the thermoplastic resin of the joining portion M2W of the second member M2 at least partially undergoes a phase change to the liquid phase so as to be able to flow. However, the upper surface M2U of the joining portion M2W of the second member M2 and the upper surface H2RU of the recessed portion H2R of the second heat source H2 are in contact with each other, and only the slight gaps exist between the side surfaces M2S1, M2S2, and M2S3 of the joining portion M2W of the second member M2 and the side surfaces H2RS1, H2RS2, H2RS3 of the recessed portion H2R of the second heat source H2. Thus, the thermoplastic resin having changed into the liquid phase does not flow significantly, and the shape of the joining portion M2W of the second member M2 can be substantially maintained.

Although the shape of the recessed portion H2R provided in the bottom surface H2L of the second heat source H2 has the opening at the front surface of the second heat source H2 so as to correspond to the L shape of the second member M2 in the above description, this is not limiting. That is, the opening may be omitted or a plurality of openings may be provided depending on the shape of the second member M2. In short, the recessed portion H2R provided in the bottom surface H2L of the second heat source H2 includes, as a required element, the upper surface H2RU, which is brought into contact with and heats the upper surface of (the joining portion M2W of) the second member M2. The recessed portion H2R also includes, as the elements, the side surfaces (H2RS1, H2RS2, and H2RS3 in the example illustrated in Fig. 3) facing the side surfaces (M2S1, M2S2, and M2S3 in the example illustrated in Fig. 1) of (the joining portion M2W of) the second member M2 with the respective slight gaps interposed therebetween.

In the above description, in steps (5) to (6) described above, the embodiment has been described in which, for preventing the thermoplastic resin of the joining portion M2W of the second member M2 from significantly flowing, the recessed portion H2R is provided in the bottom surface H2L of the second heat source H2, and the joining portion M2W of the second member M2 is accommodated in the recessed portion H2R. However, for preventing the thermoplastic resin of the joining portion M2W of the second member M2 from significantly flowing, another embodiment can be adopted. Hereinafter, the other embodiment will be described.

Fig. 4 is a schematic perspective view illustrating an arrangement state of the two members made of the material containing the thermoplastic resin and devices for joining these members at the time immediately before the start of the joining process according to a method of the other embodiment of the present disclosure. Fig. 5 is a schematic sectional view illustrating a main part of the arrangement state at the center in the width direction (w direction illustrated in Fig. 4).

As illustrated in Figs. 4 and 5, according to the present embodiment, a resin flow prevention tool J that accommodates (precisely, surrounds from three directions) the joining portion M2W of the second member M2 is placed on the upper surface M1U of the first member M1.

The resin flow prevention tool J is made of a heat insulator (or a heat insulator reinforced with metal) and has an angular U shape in a plan view. The resin flow prevention tool J has inner side surfaces JS1, JS2, and JS3 that respectively face the side surfaces M2S1, M2S2, and M2S3 of the joining portion M2W of the second member M2 with respective slight gaps interposed therebetween. Furthermore, the height of the resin flow prevention tool J is sufficiently great compared to the height, from the upper surface M1U of the first member M1, of the upper surface M2U of the joining portion M2W of the second member M2 placed on the upper surface M1U of the first member M1 with or without the joining film F interposed. Furthermore, in the illustrated example, the inner side surfaces JS1 and JS3 of the resin flow prevention tool J also face the side surfaces of the substantially flat plate-shaped portion of the second member M2 corresponding to the long side of the L shape of the second member M2 with slight gaps interposed therebetween. Thus, a space defined between the second member M2 and the resin flow prevention tool J is substantially open only to the upper side (that is, substantially closed in the horizontal direction).

Meanwhile, a second heat source H2' has a rectangular parallelepiped shape. Unlike the above-described embodiment, a recessed portion is not formed in the bottom surface H2L'. Furthermore, the bottom surface H2L' of the second heat source H2' has the same shape and dimensions as those of the upper surface M2U of the joining portion M2W of the second member M2. Accordingly, in step (5) described above, when the second heat source H2' is lowered and the bottom surface H2L' of the second heat source H2' is brought into contact with the upper surface M2U of the joining portion M2W of the second member M2, three side surfaces of the second heat source H2' face the inner side surfaces JS1, JS2, and JS3 of the resin flow prevention tool J with slight gaps interposed therebetween.

With the above-described structure, according to the present embodiment, in step (5) described above, the joining portion M2W of the second member M2 is accommodated in a space defined by the inner side surfaces JS1, JS2, and JS3 of the resin flow prevention tool J. Thus, the thermoplastic resin having changed into the liquid phase does not flow significantly, and the shape of the joining portion M2W of the second member M2 can be substantially maintained.

Although the relatively large first member M1 has a substantially flat plate shape and the relatively small second member M2 has the substantially L shape in the example described above, the embodiments of the present disclosure are not limited to this. For example, when the following members are discussed, these members can be joined together according to the method of the embodiments of the present disclosure: the relatively large first member M1 that has, for example, a curved surface such as a concave cylindrical surface, a convex cylindrical surface, or a spherical surface to be joined to the second member M2; and the relatively small second member M2 that has a U shape, a T shape, or the like having a substantially flat plate-shaped portion to be joined to the first member M1.

Although the cooling of the first member M1 and the second member M2 after the joining process has been completed is performed by blowing the air by the blower in the above description, this is not limiting. That is, the cooling of the first heat source H1 and the second heat source H2 may be performed by, for example, circulating a cooling medium (for example, air, water, oil, or the like) through a path provided in each heat source.

(Modes of Present Disclosure)

A method for joining according to a first mode of the present disclosure is a method for joining a first member and a second member to each other. The first member and the second member are made of a material containing a thermoplastic resin. The method includes the successive steps of placing the first member on an upper surface of a first heat source, placing the second member on an upper surface of the first member with or without a joining film made of a thermoplastic resin interposed therebetween, positioning a second heat source above the second member, heating the first heat source to a predetermined first temperature and the second heat source to a predetermined second temperature and lowering the second heat source so as to press a lower surface of the second heat source against an upper surface of the second member with a predetermined downward load applied to the second heat source, and cooling the first member and the second member after a predetermined hold time has elapsed from a time when a temperature of the first heat source has reached the first temperature and a temperature of the second heat source has reached the second temperature. The second temperature is higher than a melting point of the thermoplastic resin and lower than a thermal decomposition temperature of the thermoplastic resin, and the first temperature is lower than the melting point of the thermoplastic resin.

In the joining method of a second mode of the present disclosure, the first temperature, the second temperature, the load, and the hold time are set in advance by performing a preliminary experiment including the steps and performing non-destructive testing on a joining region of the first member and the second member after the preliminary experiment has been performed.

In the joining method of a third mode of the present disclosure, the first member and the second member are each shaped in advance by using a shaping die, and, after the shaping, a release agent remaining in a portion of the first member to be brought into contact with the second member with or without the joining film interposed therebetween and remaining in a portion of the second member to be brought into contact with the first member with or without the joining film interposed therebetween is removed in advance.

In the joining method of a fourth mode of the present disclosure, the second member includes a plate-shaped joining portion having a lower surface to be brought into contact with the upper surface of the first member with or without the joining film interposed therebetween, the joining portion has an upper surface positioned on a side opposite from the lower surface in a thickness direction, and, when the second heat source is lowered, the second heat source is pressed against the upper surface of the joining portion.

In the joining method of a fifth mode of the present disclosure, a recessed portion is formed in a bottom surface of the second heat source, and, when the second heat source is lowered, an upper surface of the recessed portion is pressed against the upper surface of the joining portion of the second member.

In the joining method of a sixth mode of the present disclosure, when the second heat source has been lowered, the recessed portion accommodates the joining portion of the second member.

In the joining method of a seventh mode of the present disclosure, the joining portion of the second member has a side surface connecting the upper surface and the lower surface to each other, the recessed portion of the second heat source has a side surface connecting the upper surface of the recessed portion and the bottom surface of the second heat source to each other, and, when the second heat source has been lowered, the side surface of the recessed portion of the second heat source faces the side surface of the joining portion of the second member with a gap formed therebetween.

In the joining method of an eighth mode of the present disclosure, a resin flow prevention tool formed to accommodate the joining portion of the second member is placed on the upper surface of the first member, a bottom surface of the second heat source has a shape and a dimension identical to a shape and a dimension of the upper surface of the joining portion of the second member, and, when the second heat source is lowered, the bottom surface of the second heat source is pressed against the upper surface of the joining portion of the second member.

In the joining method of a ninth mode of the present disclosure, the joining portion of the second member has a side surface connecting the upper surface and the lower surface to each other, the resin flow prevention tool has an inner side surface, and, when the second heat source has been lowered, the side surface of the second heat source faces the inner side surface of the resin flow prevention tool with a gap formed therebetween.

**Explanation of Reference Signs**

F joining film
H1 first heat source
H1U upper surface of first heat source
H2, H2' second heat source
H2L' bottom surface of second heat source
H2R recessed portion of second heat source
H2RU upper surface of recessed portion of second heat source
H2RS1, H2RS2, H2RS3 side surface of recessed portion of second heat source
L load
J resin flow prevention tool
JS1, JS2, JS3 inner side surface of resin flow prevention tool
M1 first member
M2 second member
M2L lower surface of joining portion of second member
M2S1, M2S2, M2S3 side surface of joining portion of second member
M2U upper surface of joining portion of second member
M2W joining portion of second member
T1 first temperature
T2 second temperature
Th thermal decomposition temperature of thermoplastic resin
Tm melting point of thermoplastic resin
Ts softening point of thermoplastic resin
t hold time

Claims

1. A method for joining a first member and a second member to each other, the first member and the second member being made of a material containing a thermoplastic resin, the method comprising the successive steps of:

placing the first member on an upper surface of a first heat source;
placing the second member on an upper surface of the first member with or without a joining film made of a thermoplastic resin interposed therebetween;
positioning a second heat source above the second member;
heating the first heat source to a predetermined first temperature and the second heat source to a predetermined second temperature and lowering the second heat source so as to press a lower surface of the second heat source against an upper surface of the second member with a predetermined downward load applied to the second heat source; and
cooling the first member and the second member after a predetermined hold time has elapsed from a time when a temperature of the first heat source has reached the first temperature and a temperature of the second heat source has reached the second temperature,
wherein the second temperature is higher than a melting point of the thermoplastic resin and lower than a thermal decomposition temperature of the thermoplastic resin, and the first temperature is lower than the melting point of the thermoplastic resin.

2. The method according to claim 1,
wherein the first temperature, the second temperature, the load, and the hold time are set in advance by performing a preliminary experiment including the steps and performing non-destructive testing on a joining region of the first member and the second member after the preliminary experiment has been performed.

3. The method according to claim 1 or 2,

wherein the first member and the second member are each shaped in advance by using a shaping die, and
wherein, after the shaping, a release agent remaining in a portion of the first member to be brought into contact with the second member with or without the joining film interposed therebetween and remaining in a portion of the second member to be brought into contact with the first member with or without the joining film interposed therebetween is removed in advance.

4. The method according to any one of claims 1 to 3,

wherein the second member includes a plate-shaped joining portion having a lower surface to be brought into contact with the upper surface of the first member with or without the joining film interposed therebetween,
wherein the joining portion has an upper surface positioned on a side opposite from the lower surface in a thickness direction, and
wherein, when the second heat source is lowered, the second heat source is pressed against the upper surface of the joining portion.

5. The method according to claim 4,

wherein a recessed portion is formed in a bottom surface of the second heat source, and
wherein, when the second heat source is lowered, an upper surface of the recessed portion is pressed against the upper surface of the joining portion of the second member.

6. The method according to claim 5,
wherein, when the second heat source has been lowered, the recessed portion accommodates the joining portion of the second member.

7. The method according to claim 6,

wherein the joining portion of the second member has a side surface connecting the upper surface and the lower surface to each other,
wherein the recessed portion of the second heat source has a side surface connecting the upper surface of the recessed portion and the bottom surface of the second heat source to each other, and

wherein, when the second heat source has been lowered, the side surface of the recessed portion of the second heat source faces the side surface of the joining portion of the second member with a gap formed therebetween.

8. The method according to claim 4,

wherein a resin flow prevention tool formed to accommodate the joining portion of the second member is placed on the upper surface of the first member,
wherein a bottom surface of the second heat source has a shape and a dimension identical to a shape and a dimension of the upper surface of the joining portion of the second member, and
wherein, when the second heat source is lowered, the bottom surface of the second heat source is pressed against the upper surface of the joining portion of the second member.

9. The method according to claim 8,

wherein the joining portion of the second member has a side surface connecting the upper surface and the lower surface to each other,
wherein the resin flow prevention tool has an inner side surface, and
wherein, when the second heat source has been lowered, the side surface of the second heat source faces the inner side surface of the resin flow prevention tool with a gap formed therebetween.

## FIG. 1

# FIG. 2

# FIG. 3

FIG. 4

FIG. 5

View V

## INTERNATIONAL SEARCH REPORT

| International application No. |
| --- |
| **PCT/JP2023/015188** |

### A. CLASSIFICATION OF SUBJECT MATTER

**B29C 65/02**(2006.01)i
FI:   B29C65/02

According to International Patent Classification (IPC) or to both national classification and IPC

### B. FIELDS SEARCHED

Minimum documentation searched (classification system followed by classification symbols)

B29C65/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2008-110562 A (NIPPON VALQUA INDUSTRIES, LTD.) 15 May 2008 (2008-05-15) | 1-9 |
| A | JP 2017-128035 A (IHI CORP.) 27 July 2017 (2017-07-27) | 1-9 |
| A | JP 2020-124886 A (KABUSHIKI KAISHA TOYOTA JIDOSHOKKI) 20 August 2020 (2020-08-20) | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 June 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/015188**

| Patent document cited in search report | | | Publication date (day/month/year) | Patent family member(s) | | | Publication date (day/month/year) |
|---|---|---|---|---|---|---|---|
| JP | 2008-110562 | A | 15 May 2008 | US | 2008/0258327 | A1 | |
| | | | | TW | 200833510 | A | |
| JP | 2017-128035 | A | 27 July 2017 | US | 2018/0304496 | A1 | |
| | | | | WO | 2017/126158 | A1 | |
| | | | | EP | 3406412 | A1 | |
| | | | | CN | 108472841 | A | |
| JP | 2020-124886 | A | 20 August 2020 | (Family: none) | | | |

Form PCT/ISA/210 (patent family annex) (January 2015)